# EUROPEAN PATENT SPECIFICATION

(11) **EP 1 482 009 B1**
(45) Date of publication and mention of the grant of the patent: **08.10.2008**
(21) Application number: 03012116.4
(22) Date of filing: 30.05.2003
(51) Int. Cl.: C08L 23/08, C08L 13/02, C08L 9/08

(54) **Elastromeric composition and process for producing glove having interpenetrating network structure**
Gummizusammensetzung zur Herstellung von Handschuhen mit verknüpfter Netzstruktur
Composition élastomère et procédé de préparation de gants à réseaux interpénétrés

(43) Date of publication of application: 01.12.2004
(73) Proprietor: Posaidon Enterprise Co., Ltd., Tainan, Taiwan, R.O.C. (TW)
(72) Inventor: Li, Rong-Shing, Tainan, 721 (TW)
(74) Representative: Winkler, Andreas Fritz Ernst

(56) References cited:
- US-A- 3 779 799
- US-A- 4 070 713
- US-A- 5 084 514
- US-B1- 6 187 865
- DATABASE WPI Derwent Publications Ltd., London, GB; AN 1993-408910 XP002257929 & JP 05 306383 A (DAINIPPON), 19 November 1993 (1993-11-19)

## Description

The present invention relates to an elastomeric composition for producing an elastomeric article, and more particularly to an elastomeric composition for producing an elastomeric article having an interpenetrating network structure. The present invention also relates to a method for producing such elastomeric article.

A conventional glove is produced by blending PVC materials with plasticizers. When such glove is combusted, for example in the case of fire or being incinerated, the PVCs will be oxidized to generate corrosive gases and toxic gases such as dioxin, and the plasticizers will be oxidized to generate various contaminating substances. The corrosive gases are considered responsible for pulmonary edema when being inhaled and for serious damages of instruments in contact therewith. Dioxin and some of the contaminating substances might also cause the problems of environmental hormone and the like. In views of environmental protection, these conventional gloves have been eliminated through competition. Therefore, there is always a need to develop an improved glove so as to meet the requirement of environmental protection.

Although a glove made of natural rubber is known to be environmentally-friendly, the mechanical properties such as Young's modulus of the natural rubber glove are unsatisfactory. In addition, the natural rubber is disadvantageous to be a source of irritation such as skin itch, asthma and shock, etc.

JP 9-505612 (1997) described a glove manufactured by nitrile-butadiene rubber (NBR) latex. Although the NBR glove contains no known sources of irritation and has good resistance to chemical solvents, the commercial applications thereof are limited due to high manufacturing costs.

JP 55-163202 (1980) described a process for manufacturing a glove by using styrene-butadiene rubber (SBR). The SBR material is cost-effective. However, such glove has poor tensile stress and low tear strength, and the immersion molding effects of such glove are unsatisfactory.

JP 7-506642 T (1995) described a process for manufacturing a glove by using thermoplastic butadiene-styrene-butadiene block polymers. Their commercial applications are limited due to the poor flexibility of such materials and complex processes for producing the gloves therefrom.

US-A-6187865 discloses latex blends including styrene-butadiene and EVA latex, but carboxylated styrene-butadiene latex and the use for gloves is not disclosed.

JP-A-5306383 discloses a latex of 65 wt.pts. carboxy modified styrene butadiene latex, 26 wt. pts. EVA emulsion, water and urea.

US-A-3779799 discloses emusions of EVA (58%), carboxylated styrene butadiene latex 4.27%, surfactant, gel and water

US-A-5084514 discloses gloves prepared from carboxylated diene/acrylate/acrylonitrile latex. Stabilisers, accelerators and crosslinkers are mentioned. Additional EVA and styrene butadiene latex may be present

It is an object of the present invention to provide an elastomeric composition for producing an elastomeric article having an interpenetrating network structure so as to meet the requirement of environmental protection.

It is another object of the present invention to provide a cost-effective process for producing an elastomeric article from an elastomeric composition, which has an interpenetrating network structure.

In accordance with a first aspect of the present invention, there is provided an elastomeric composition for producing a glove. The elastomeric composition comprises a base latex comprising styrene-butadiene rubber (SBR) latex and a carboxylated styrene-butadiene rubber (C-SBR) latex and a thermoplastic ethylene-vinylacetate (EVA) copolymer latex.

The mixing ratio of the base latex to the EVA copolymer latex is from 99:1 to 5:95.

The composition comprises moreover
1~10 weight parts of an activator;
0.1~2 weight parts of a vulcanization agent; and
0.5 ~10 weight parts of a vulcanizagion accelerator.

Preferably, the mixing ratio of the base latex to the EVA copolymer latex is from 99:5 to 40:60.

Preferably, the base latex comprises from 1% to 40% by mole of carboxylate group.

Preferably, the base latex comprises from 5% to 20 % by mole of carboxylate group.

In an embodiment, the composition further comprises at least one additive selected from a group consisting of anti-aging agents, enforcement agents, fillers and additional latices.

Preferably, the activator includes zinc oxides, in amount of from 1% to 10% by weight based on the total weight of the base latex and the EVA copolymer latex.

Preferably, the vulcanization agent includes sulfur, organic sulfide and a combination thereof, in amount of from 0.1% to 2% by weight based on the total weight of the base latex and the EVA copolymer latex.

Preferably, the vulcanization agent includes at least one selected from a group consisting of zinc N-ethyl-N-phenyldithiocarbamate, zinc dimethyldithiocarbamate, zinc diethyldithiocarbamat, zinc dibutyldithiocarbamate, zinc mercaptobenzothiazole, tetramethyl disufide and a combination thereof, in amount of from 0.5% to 10% by weight based on the total weight of the base latex and the EVA copolymer latex.

Preferably, the anti-aging agent includes phenolic compounds or amine compounds, in amount of from 0.5% to 3% by weight based on the total weight of the base latex and the EVA copolymer latex.

Preferably, the enforcement agent includes at least one selected from a group consisting of nono-scale montmorillonite, mica, clay, bentonite, saponite, silica, titanium dioxide, potassium titanate whisker and a combination thereof, in amount of less than 20% by weight based on the total weight of the base latex and the EVA copolymer latex.

Preferably, the filler includes at least one selected from a group consisting of photocatalyst, talcum powder, calcium carbonate, titanium dioxide, antistatic agent, far infrared-ray emitting agent, pigment and a combination thereof, in amount of less than 20% by weight based on the total weight of the base latex and the EVA copolymer latex.

Preferably, the additional latices include aqueous polyurethane, aqueous nitrile rubber latex, acrylic resin latex and a combination thereof, in amount of less than 50% by weight based on the total weight of the base latex and the EVA copolymer latex.

The elastomeric composition comprises 100 weight parts of a latex mixture, 1∼10 weight parts of an activator, 0.1∼2 weight parts of a vulcanization agent and 0.5∼10 weight parts of a vulcanization accelerator. The latex mixture comprises a base latex and a thermoplastic ethylene-vinylacetate (EVA) copolymer latex. The base latex comprises a mixture of styrene-butadiene rubber (SBR) latex and carboxylated styrene-butadiene rubber (C-SBR) latex wherein the mixing ratio of the base latex to the EVA copolymer latex is from 99:1 to 5:95.

In an embodiment, the composition further comprises 0.5∼3 weight parts of an anti-aging agent, optionally an enforcement agent less than 20 weight parts, optionally a filler less than 20 weight parts and optionally additional latices less than 50 weight parts.

In accordance with a third aspect of the present invention, there is provided a process for producing an elastomeric article having an interpenetrating network structure. Firstly, a mold is contacted with an elastomeric composition comprising a base latex and a thermoplastic ethylene-vinylacetate (EVA) copolymer latex, wherein the base latex comprises a styrene-butadiene rubber (SBR) latex and/or a carboxylated styrene-butadiene rubber (C-SBR) latex. Then, the elastomeric composition on the mold is allowed to perform a vulcanization reaction, thereby forming the elastomeric article having the interpenetrating network structure.

In an embodiment, the process further comprises a step of immersing the mold into a solution of a coagulant selected from a group consisting of calcium nitrate, calcium chloride, alky ammonium and a combination thereof, before the step of contacting the mold with the elastomeric composition.

In an embodiment, the process further comprises a step of surface-treating the mold after the step of contacting the mold with the elastomeric composition and before the vulcanization reaction is performed.

In an embodiment, the step of surface-treating the mold is performed by using a surface-treating agent comprising 10∼20% by weight of a synthesized resin, 10∼20% by weight of an acrylic-styrene resin, 1∼10% by weight of a silicon resin and the balance of water.

In an embodiment, the elastomeric article having the interpenetrating network structure is a glove.

The above objects and advantages of the present invention will become more readily apparent to those ordinarily skilled in the art after reviewing the following detailed description.

The objects of meeting the requirements of environmental protection and cost-effectiveness can be achieved by an elastomeric composition and a method of the present invention for producing an elastomeric article having an interpenetrating network structure.

The elastomeric composition of the present invention comprises a base latex and a thermoplastic ethylene-vinylacetate (EVA) copolymer latex. The base latex comprises styrene-butadiene rubber (SBR) latex and a carboxylated styrene-butadiene rubber (C-SBR) latex. Some suitable additives, for example activators, vulcanization agents, vulcanization accelerators, anti-aging agents, enforcement agents, fillers and additional latices, can be combined into the elastomeric composition so as to impart desirable properties of the produced elastomeric articles. During a vulcanization process, the base latex and the EVA copolymer latex of the elastomeric composition are crosslinked to form the interpenetrating network structure of the elastomeric article having the interpenetrating network structure so as to impart excellent elastomeric properties such as elasticity and extensibility, as will be described hereinafter. More specifically, due to the excellent elasticity and extensibility, the elastomeric article produced from the elastomeric composition will generate different contractible degrees for the moving and motionless portions of the wearer. Thus, the wearer can feel the elastomeric article next to the skin.

The carboxylated styrene-butadiene rubber (C-SBR) latex is obtained by introducing carboxylate groups into the molecule chains of SBR. The base latex comprises preferably from 1% to 40%, and more preferably from 5% to 20 % by mole of carboxylate groups. The presence of the C-SBR latex can provide good immersion molding effects of the produced elastomeric article and increase hydrogen-bond density of the SBR latex. The tensile stress and tear strength of the elastomeric article can be enhanced accordingly. The hydrogen bonding of C-SBR and/or SBR latex and EVA copolymer latex is increased during vulcanization so as to promote formation of the interpenetrating network structure. Furthermore, the EVA copolymer latex can also increase immersion molding effects of the produced elastomeric article, and thus provides good softness and touch feel.

The above-mentioned base latex can be used alone or in a mixture of at least two C-SBR lattices with different carboxylate groups. The mixing ratio of the base latex to the EVA copolymer latex is preferably from 99:1 to 5:95, and more preferably from 99:5 to 40:60.

The activator used in the present invention may be zinc oxides, in amount of from 1% to 10% by weight based on the total weight of the base latex and the EVA copolymer latex.

The vulcanization agent includes for example sulfur, organic sulfide and a combination thereof, in amount of from 0.1% to 2% by weight based on the total weight of the base latex and the EVA copolymer latex.

The vulcanization agent is used to promote vulcanization reaction and can include for example zinc N-ethyl-N-phenyldithiocarbamate (PX), zinc dimethyldithiocarbamate (PZ), zinc diethyldithiocarbamat (EZ), zinc dibutyldithiocarbamate (BZ), zinc mercaptobenzothiazole (MZ), tetramethyl disufide and a combination thereof, in amount of from 0.5% to 10% by weight based on the total weight of the base latex and the EVA copolymer latex.

The anti-aging agent may be phenolic compounds or amine compounds, in amount of from 0.5% to 3% by weight based on the total weight of the base latex and the EVA copolymer latex.

The enforcement agent used in the present invention includes for example nono-scale montmorillonite, mica, clay, bentonite, saponite, silica, titanium dioxide, potassium titanate whisker and a combination thereof, in amount of less than 20% by weight based on the total weight of the base latex and the EVA copolymer latex.

The filler used in the present invention includes for example photocatalyst, talcum powder, calcium carbonate, titanium dioxide, antistatic agent, far infrared-ray emitting agent, pigment and a combination thereof, in amount of less than 20% by weight based on the total weight of the base latex and the EVA copolymer latex.

The additional latices can include for example aqueous polyurethane, aqueous nitrile rubber (NBR) latex, acrylic resin latex and a combination thereof, in amount of less than 50% by weight based on the total weight of the base latex and the EVA copolymer latex.

The additives described hereinbefore can be incorporated into the elastomeric composition of the present invention in combination with a dispersing agent so as to increase dispersing effect thereof. Depending on the types of additives, such dispersing agents can be any suitable surfactant in amount of from 0.3% to 1% by weight based on the weight of the additive to be used.

A process for producing a glove will be described as follows. Firstly, a glove mold is immersed in a solution of a coagulant comprising calcium nitrate, calcium chloride, alky ammonium or a combination thereof. After the coagulant is precipitated from the solution, the glove mold is removed and dried. Then, the glove mold is immersed in an elastomeric composition of the present invention, removed and dried. Optionally, the glove mold is surface-treated by using a surface-treating agent comprising 10∼20% by weight of a synthesized resin, 10∼20% by weight of an acrylic-styrene resin, 1∼10% by weight of a silicon resin and the balance of water. Then, the elastomeric composition on the surface-treated glove mold is vulcanized at a temperature between 90 and 180°C for several minutes to several hundred minutes. After the vulcanized elastomeric composition is cooled and demolded, a glove having an interpenetrating network structure is formed.

The present invention will be further understood in more details with reference to the following examples.

### Example

### Examples C-1, C-2 (comparative) and examples 1 and 2

### Preparation of elastomeric composition

Four elastomeric compositions are prepared by the components indicated in Table 1 below, each component being represented by weight parts.

**Table 1**

| Component | Example# | | | |
|---|---|---|---|---|
| | C-1 | C-2 | 1 | 2 |
| SBR | 100 | 0 | 40 | 50 |
| C-SBR* | 0 | 100 | 60 | 50 |
| EVA | 20 | 10 | 12 | 15 |
| Sulfur | 0.6 | 0.6 | 0.6 | 0.6 |
| Zinc oxide | 2 | 2 | 2 | 2 |
| PX** | 2 | 2 | 2 | 2 |
| Nono-scale clay | 6 | 6 | 6 | 6 |
| aqueous nitrile rubber latex | 10 | 10 | 10 | 10 |
| water | 20 | 20 | 20 | 20 |

| | | | | |
|---|---|---|---|---|
| * comprising 10 % by mole of carboxylate group **zinc N-ethyl-N-phenyldithiocarbamate | | | | |

### Preparation of glove

Four sets of glove molds are immersed in an aqueous solution containing 0.5∼35% by weight of calcium nitrate. After calcium nitrate is precipitated from the solution, the glove mold is removed and dried. Then, the four sets of glove molds are immersed in the elastomeric compositions of the examples 1, 2, C-1, C-2, respectively. Then, these glove molds are removed and dried. Optionally, the glove mold is surface-treated by using a surface-treating agent comprising 15% by weight of a synthesized resin, 15% by weight of an acrylic-styrene resin, 4% by weight of a silicon resin and 66% by weight of water. Then, the elastomeric composition on the surface-treated glove mold is vulcanized at a temperature of 150°C for 15 minutes. After the vulcanized elastomeric compositions are cooled and demolded, gloves having interpenetrating network structures are formed.

### Testing of physical properties

Table 2 shows the test results of physical properties of the gloves produced in the examples 1, 2, C-1, C-2.

**Table 2**

| Physical properties | Example# | | | |
|---|---|---|---|---|
| | C-1 | C-2 | 1 | 2 |
| Ultimate tensile stress (MPa) | 20.3 | 23.3 | 21.9 | 20.5 |
| Ultimate elongation (%) | 560 | 740 | 680 | 620 |
| Tensile stress @100%(MPa) | 1.03 | 1.18 | 1.10 | 1.06 |
| Tensile stress @200%(MPa) | 1.90 | 2.27 | 2.11 | 2.03 |
| Tensile stress @300%(MPa) | 2.87 | 3.38 | 3.22 | 3.12 |
| Tensile stress @400%(MPa) | 4.67 | 5.13 | 5.01 | 4.88 |
| Tensile stress @500%(MPa) | 5.77 | 7.70 | 7.12 | 6.99 |

The results of Table 2 show that the gloves produced by using the elastomeric compositions of the present invention have excellent tensile stress and elongation. Thus, good softness and touch feel can be provided to the wearer.

### Combustion test of glove

The combustion tests of the above gloves are performed to measure acidity of the combusted gases and contents of dioxin.

The results of the combustion tests show that the acidities of the combusted gases have pH values between 4.0 and 4.6, and the contents of dioxin is approximately 0 ng/g. In contrast, the acidities of the combusted gases for a commercial PVC glove is about pH 2.0, and the contents of dioxin is about 25 ng/g.

The above results show the gloves produced by using the elastomeric compositions of the present invention have superior environmental protection effects.

While the invention has been described in terms of what is presently considered to be the most practical and preferred embodiments, it is to be understood that the invention needs not be limited to the disclosed embodiment. On the contrary, it is intended to cover various modifications and similar arrangements included within the spirit and scope of the appended claims which are to be accorded with the broadest interpretation so as to encompass all such modifications and similar structures.

## Claims

1. An elastomeric composition comprising:
100 weight parts of latex mixture comprising a base latex and a thermoplastic ethylene-vinylacetate (EVA) copolymer latex, the mixing ratio of the base latex to the EVA copolymer latex is, based on weight parts, from 99:1 to 5:95;
1∼10 weight parts of an activator;
0.1∼2 weight parts of vulcanization agent; and
0.5∼10 weight parts of a vulcanization accelerator, **characterized in that** the base latex comprises a blend of styrene-butadiene rubber (SBR) and carboxylated styrene butadiene rubber (C-SBR) latex.

2. The composition according to claim 1, **characterized in that** the base latex comprises from 5% to 20% by mole of carboxylate group.

3. The composition according to claim 1, **characterized in that** the activator includes zinc oxides.

4. The composition according to claim 1, **characterized in that** the vulcanization agent includes sulfur, organic sulfide or a combination thereof.

5. The composition according to claim 1, **characterized in that** the vulcanization accelerator includes zinc N-ethyl-N-phenyldithiocarbamate, zinc dimethyldithiocarbamate, zinc diethyldithiocarbamate, zinc dibutyldithiocarbamate, zinc mercaptobenzothiazole, tetramethyl disulfide or a combination thereof.

6. The composition according to claim 1, **characterized in that** the composition further comprises:
0.5∼3 weight parts of anti-aging agent;
optionally less than 20 weight parts of enforcement agent;
optionally less than 20 weight parts of filler; and
optionally less than 50 weight parts of additional latex.

7. The composition according to claim 6, **characterized in that** the anti-aging agent includes phenolic compounds or amine compounds.

8. The composition according to claim 6, **characterized in that** the enforcement agent includes nano-scale montmorillonite, mica, clay, bentonite, saponite, silica, titanium dioxide, potassium titanate whisker or a combination thereof.

9. The composition according to claim 6, **characterized in that** the filler includes photocatalyst, talcum powder, calcium carbonate, titanium dioxide, antistatic agent, far infrared-ray emitting agent, pigment or a combination thereof.

10. The composition according to claim 6, **characterized in that** the additional latex includes aqueous polyurethane, aqueous nitrile rubber latex, acrylic resin latex or a combination thereof.

## Patentansprüche

1. Elastomere Zusammensetzung, welche umfasst:
100 Gewichtsteile einer Latexmischung umfassend einen Basislatex und einen thermoplastischen Ethylen-Vinylacetat-Copolymerlatex (EVA), wobei das Mischungsverhältnis des Basislatex zum EVA-Copolymerlatex, basierend auf Gewichtsteilen, 99:1 bis 5:95 beträgt;
1-10 Gewichtsteile eines Aktivators;
0,1-2 Gewichtsteile eines Vulkanisationsmittels; und
0,5-10 Gewichtsteile eines Vulkanisationsbeschleunigers, **dadurch gekennzeichnet, dass** der Basislatex eine Mischung aus Styrol-Butadien-Kautschuk (SBR) und carboxyliertem Styrol-Butadien-Kautschuklatex (C-SBR) umfasst.

2. Zusammensetzung nach Anspruch 1, **dadurch gekennzeichnet, dass** der Basislatex 5 bis 20 Molprozent an Carboxylatgruppe umfasst.

3. Zusammensetzung nach Anspruch 1, **dadurch gekennzeichnet, dass** der Aktivator Zinkoxide einschließt.

4. Zusammensetzung nach Anspruch 1, **dadurch gekennzeichnet, dass** das Vulkanisationsmittel Schwefel, organisches Sulfid oder eine Kombination derselben einschließt.

5. Zusammensetzung nach Anspruch 1, **dadurch gekennzeichnet, dass** der Vulkanisationsbeschleuniger Zink-N-ethyl-N-phenyldithiocarbamat, Zinkdimethyldithiocarbamat, Zink-diethyldithiocarbamat, Zink-dibutyldithiocarbamat, Zink-mercaptobenzothiazol, Tetramethyldisulfid oder eine Kombination derselben einschließt.

6. Zusammensetzung nach Anspruch 1, **dadurch gekennzeichnet, dass** die Zusammensetzung weiter umfasst:
0,5-3 Gewichtsteile eines Antialterungsmittels;
optional weniger als 20 Gewichtsteile eines Verstärkungsmittels;
optional weniger als 20 Gewichtsteile eines Füllstoffs; und
optional weniger als 50 Gewichtsteile eines zusätzlichen Latex.

7. Zusammensetzung nach Anspruch 6, **dadurch gekennzeichnet, dass** das Antialterungsmittel phenolische Verbindungen oder Aminverbindungen einschließt.

8. Zusammensetzung nach Anspruch 6, **dadurch gekennzeichnet, dass** das Verstärkungsmittel Montmorillonit im Nanomaßstab, Glimmer, Ton, Bentonit, Saponit, Silika, Titandioxid, Kaliumtitanat-Whisker oder eine Kombination derselben einschließt.

9. Zusammensetzung nach Anspruch 6, **dadurch gekennzeichnet, dass** der Füllstoff Photokatalysator, Talkumpulver, Calciumcarbont, Titandioxid, antistatisches Agens, Ferninfrarotstrahlen emittierendes Agens, Pigment oder eine Kombination derselben einschließt.

10. Zusammensetzung nach Anspruch 6, **dadurch gekennzeichnet, dass** der zusätzliche Latex wässriges Polyurethan, wässrigen Nitrilkautschuklatex, Acrylharzlatex oder eine Kombination derselben einschließt.

## Revendications

1. Composition élastomère comprenant :
100 parties en poids d'un mélange de latex comprenant un latex de base et un latex copolymère thermoplastique d'éthylène-acétate de vinyle (EVA), le rapport de mélange du latex de base par rapport au latex copolymère d'EVA étant, sur la base des parties en poids, de 99/1 à 5/95 ;
1∼10 parties en poids d'un activateur ;
0,1∼2 parties en poids d'un agent de vulcanisation ; et
0,5∼10 parties en poids d'un accélérateur de vulcanisation, **caractérisé en ce que** le latex de base comprend un mélange de latex de caoutchouc styrène-butadiène (SBR) et de caoutchouc styrène-butadiène carboxylé (C-SBR).

2. Composition selon la revendication 1, **caractérisée en ce que** le latex de base comprend de 5 % à 20 % en moles d'un groupe carboxylate.

3. Composition selon la revendication 1, **caractérisée en ce que** l'activateur comprend des oxydes de zinc.

4. Composition selon la revendication 1, **caractérisée en ce que** l'agent de vulcanisation comprend du soufre, du sulfure organique ou une combinaison de ceux-ci.

5. Composition selon la revendication 1, **caractérisée en ce que** l'accélérateur de vulcanisation comprend du N-éthyl-N-phényldithiocarbamate de zinc, du diméthyldithiocarbamate de zinc, du diéthyldithiocarbamate de zinc, du dibutyldithiocarbamate de zinc, du mercaptobenzothiazole de zinc, du disulfure de tétraméthyle ou une combinaison de ceux-ci.

6. Composition selon la revendication 1, **caractérisée en ce que** la composition comprend en outre :
0,5∼3 parties en poids d'un agent anti-vieillissement ;
éventuellement moins de 20 parties en poids d'un agent d'application ;
éventuellement moins de 20 parties en poids d'une charge ; et
éventuellement moins de 50 parties en poids d'un latex supplémentaire.

7. Composition selon la revendication 6, **caractérisée en ce que** l'agent anti-vieillissement comprend des composés phénoliques ou des composés amines.

8. Composition selon la revendication 6, **caractérisée en ce que** l'agent d'application comprend de la montmorillonite, du mica, de l'argile, de la bentonite, de la saponite, de la silice, du dioxyde de titane, de la trichite de titanate de potassium nanométrique, ou une combinaison de ceux-ci.

9. Composition selon la revendication 6, **caractérisée en ce que** la charge comprend un photo-catalyseur, de la poudre de talc, du carbonate de calcium, du dioxyde de titane, un agent antistatique, un agent d'émission de rayons infrarouges lointains, un pigment ou une combinaison de ceux-ci.

10. Composition selon la revendication 6, **caractérisée en ce que** le latex supplémentaire comprend un polyuréthane aqueux, un latex de caoutchouc nitrile aqueux, un latex de résine acrylique ou une combinaison de ceux-ci.
